# EUROPEAN PATENT APPLICATION

(11) **EP 1 213 944 A2**
(43) Date of publication of application: **12.06.2002**
(21) Application number: 01204433.5
(22) Date of filing: 20.11.2001
(51) Int. Cl.: H04Q 11/00

(54) **Module and method for reconfiguring optical networks**

(30) Priority: 10.12.2000 IL 14020700
(71) Applicant: Lightscape Networks Ltd., Petach Tikva 49517 (IL)
(72) Inventor: Zaacks, Mark Raymond, Petach Tikva 49315 (IL); Mintz, Yaron, Kfar-Sava 44405 (IL)
(74) Representative: Curell Aguilà, Marcelino

(57) **Abstract**

A module for arbitrary configuring/reconfiguring a topology of optical networks, comprising at least one optical switching device connectable to an optical network, and a plurality of network elements connectable to the optical switching device(s). The optical switching device(s) are controllable to selectively connect thereto and disconnect therefrom one or more of the elements for switching them in or off the optical network. Preferably, the module is a pre-manufactured block suitable for insertion into the optical network, and the elements are connectable to the switching devices so that each of the elements can be either switched in the network, or bypassed.

## Description

### Field of the invention

The present invention relates to telecommunication networks equipment, more particularly, to equipment of optical networks.

### Background of the invention

The problem of upgrading communication networks is known to those skilled in the art as a problem associated with extra design and setup expenses for installing additional equipment to a functioning network. Moreover, such inserted elements usually cannot be activated without affecting traffic. Analogous difficulties take place when some pieces of equipment are to be removed from the network or replaced by different ones.

Specific problems occur in optical networks, and particularly in those utilizing WDM (Wavelength Division Multiplexing) principle. In WDM networks, it is often required to add elements for dropping/adding channels transmitting specific wavelengths (so called Optical Add Drop Multiplexers OADM), for amplifying, filtering, dispersion compensation, etc. Order in which the elements are placed in the network is usually important. One of the main conditions for any reconfiguring performed in WDM networks is minimally affecting data passing through the functioning network, including and especially the data which is not transmitted via the channels undergoing changes.

US 4,927,225 describes an optical switch 2x2 (i.e. two inputs by two outputs) in a pre-installed configuration with an electrical receiver and electrical transmitter, which is capable of channeling incoming light to selected inputs/outputs being transmission elements. The switch has two states - an active state and a bypass state. Such a switch can be connected to a node and is intended to serve either for coupling the node to a network, or for bypassing the node in case of the node's malfunction.

While being capable of manipulating with existing nodes of the network in the mentioned simple manner, such switches are not adapted to resolve a problem of the network future upgrading or modification. The US patent does not describe options of adding new elements to or removing existing elements from the node, or changing configuration of the network in an arbitrary manner. It also does not provide a possibility for selectively handling different channels in WDM networks.

### Summary of the invention

The above purpose can be achieved by providing a module for arbitrary configuring or reconfiguring topology of optical networks, being preferably a pre-manufactured (ready-made) module suitable for insertion into an optical network and comprising:
- at least one optical switching device connectable to the optical network and
- a plurality of network elements connectable to said at least one optical switching device;
wherein said at least one optical switch is controllable to selectively connect thereto and disconnect therefrom one or more of said elements for switching them in or off the network.

The described module enables easy reconfiguring or upgrading of optical networks by switching the module into a portion of the network apt to be changed, and selecting the elements to be introduced in the network or removed therefrom.

Preferably, the module may serve for forming a re-configurable network node, which presents another aspect of the invention. In such a node, network elements can be added, removed, their positions can be exchanged, they may serve different WDM channels, etc.

According to the preferred embodiment of the invention, the elements are connectable so that each of them can be either switched in the network, or bypassed.

The network elements connectable to the optical switching device(s) can be selected from the following non-exhaustive group comprising: amplifiers, filters, multiplexers/demultiplexers (MUX-DEMUX), OADMs (optical add-drop multiplexer), delay lines, converting means including wavelength converting devices, dispersion compensating devices, additional optical switches or matrices, and the like.

It should be noted that the network elements connectable to the optical switches may be both optical and electro-optical devices.

To achieve the maximally hitless connection, fast optical switching devices should be used in combination with the network elements connected in series with appropriate delay lines.

According to one particular embodiment of the invention, the plurality of optical switching devices may contain so-called 1x2 and/or 2x2 optical bypass switches.

Alternatively or in combination, the optical switching devices may include at least one optical switching matrix n x m (or so-called optical cross-connect OCC) comprising a number of inputs and a number of outputs utilized for selectively connecting to the mentioned network elements.

Any of the optical switching devices is connectable to at least one network element and capable of selectively setting each of the elements in one of two modes: a working mode and a bypass mode.

The working mode of the element connectable to one or more optical switches is considered to be a mode where the element connected between contacts of said switch(es) is switched in a path passing from a switch input to a switch output or vice versa. The bypass mode of said element is a mode where the element is not included in any path passing between inputs and outputs of the optical switch(es).

According to this embodiment, the module comprises the above-mentioned plurality of such switches, which may be connected in series and in parallel.

Yet another option is to interconnect two optical switching devices so that one of them is connected to the other as a network element to an optical switch, in the meaning of the present invention. In this embodiment, of course, both of the optical switching devices are connectable to other network elements.

The above-described approach also defines a new inventive method of configuring and reconfiguring optical networks. The method can be performed in two main versions. According to one version, the step of switching the module into the network portion which is apt to be changed, is provided when upgrading is required.

According to the second and preferred version, the step of switching the upgrading module into such a portion of the network (say, into a network node) is performed in advance, simultaneously with establishing the network.

In other words, the proposed method of configuring/reconfiguring optical networks can be performed by
switching the module, as described above, into a portion of an optical network,
selecting one or more of the network elements to be introduced in the network according to a required configuration and considering the remaining network elements as non-selected,
forming connections in the module by controlling said at least one optical switching device to set the non-selected elements in the bypass mode and the selected elements in the working mode according to the required configuration.

The above operations result in switching the selected network elements in the network while switching the non-selected elements off the network.

Using fast switches, appropriate delay lines and dispersing elements in order to minimize optical beating effects, one can achieve a property of simultaneous connectivity/de-connectivity for both the inserted and the removed elements and their different wavelength channels, thereby reaching the hitless switching whenever required.

Alternatively or in addition, a so-called "make before brake" switching configurations can be used to achieve the hitless switching.

### Brief description of the drawings

The invention will be further described with reference to the attached non-limiting drawings in which:
Figs. 1a, 1b illustrate one simplified embodiment of the module comprising a number of optical switches 2x2 connected in series, the module is suitable for inserting in the optical network so as to introduce selected optical elements.
Figs. 2a, 2b illustrate another simplified embodiment of the module where the optical elements are connectable between adjacent optical switches 1x2.
Figs. 3a, 3b, 3c illustrate an alternative simplified embodiment of the module, comprising optical switches 1x1 connected in parallel, for reconfiguring the network.
Fig. 4 illustrates yet another schematic embodiment of the module, comprising an optical matrix (optical cross connect) serving as a plurality of optical switches and capable of interconnecting a plurality of optical elements.
Fig. 5 schematically illustrates yet another possible interconnection of the optical switches in the module.
Fig. 6 schematically illustrates a combined module of the invention comprising a plurality of optical switching devices and a plurality of optical elements, which can be arranged in different combinations with the aid of the control unit.

### Detailed description of the preferred embodiments

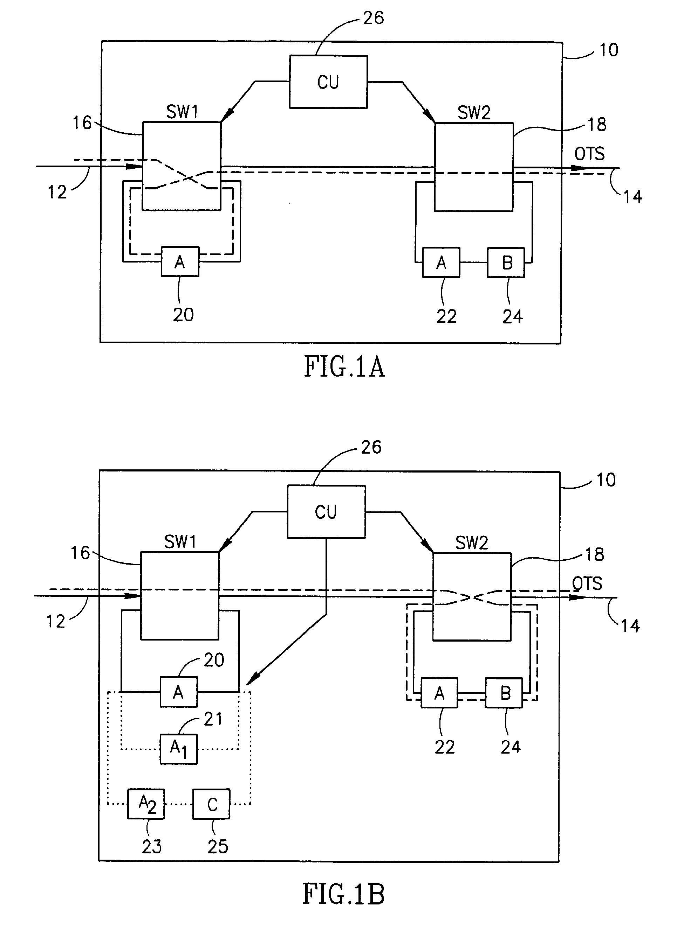

Fig. 1a illustrates a module 10 having an optical input 12 and an optical output 14 for connecting the module to a network, and containing a chain of 2X2 switches, each having two inputs and two outputs. In this simplified illustration, two switches SW1 and SW2 are shown marked 16 and 18, respectively. Each of the switches is connectable to one or more optical elements. For example, switch 16 is connected to an optical element of type A marked 20, and switch 18 - to another optical element of type A (marked 22) in series with an optical element of type B marked 24. The switches are controlled by a control unit (CU) 26. When switch 16 is in its active (working) mode, element 20 is included in the optical path (shown by a dotted contour). In Figure 1a, switch 18 is in its bypass mode, and the optical signal received from switch 16 passes via switch 18 to its output and to the optical output 14 (optical transport section - OTS) of module 10. The module thereby inserts the optical element A in the optical path of the network.

Fig. 1b illustrates how the network configuration can be changed if the module is controllably restructured. In this case, the switch 16 is in its bypass mode, while switch 18 is in the working mode (the dashed line illustrates the connection). Owing to that, elements A and B are inserted in the optical path. Actually, this embodiment demonstrates how one introduces a new element B while keeping the functionality of element A, by introducing A and B together in switch SW2, activating it and simultaneously deactivating switch SW1. If sufficiently fast switches with appropriate delay lines are used, one can obtain almost hitless switching. Of course, the path may be equipped with all the available optical elements 20, 22 and 24 if required - to this purpose the control unit 26 should set both switches into the active mode.

If both switches are in the bypass mode, the module does not affect the optical path at all. It means, that the module may be pre-installed in the network for future upgrading, and be activated whenever the reconfiguring or upgrading is required.

It should be noted that when a particular switch is in its bypass mode, optical elements connectable to it may be replaced with the aid of the control unit 26. This option is shown in Fig. 1b, where optical elements 21, 23 and 25 are illustrated in dotted lines as selectively connectable to the optical switch 16.

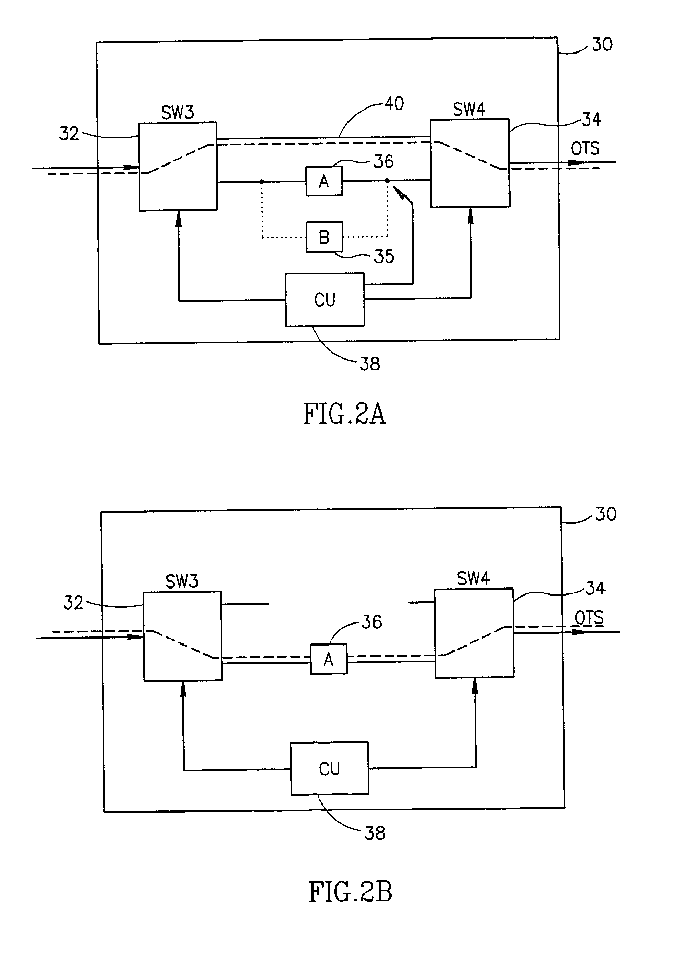

Fig. 2a illustrates how the module according to the invention can be constructed using optical switches 1x2, each having a sole connection at one stage and two connections at the opposite stage. The drawing illustrates a module 30 having an input and an output, and comprising at least two switches 1x2 marked 32 and 34. Between the two switches, an optical element A marked 36 is connected which can be replaced with an optical element B marked 35, if desired. It can be provided without affecting traffic, when the switches are in the bypass mode (dashed contour 40). Modes of the switches and combinations of the optical elements connectable to the switches are defined by the control unit (CU) 38.

Fig. 2b shows how the network may be reconfigured if the switches 32, 34 are set in their active state, and the optical element connected therebetween is selected by the control unit 38. It should be mentioned, that the bypass connection (marked 40 in Fig. 2a) may also be one of connections selectable by the control unit 38.

The embodiment utilizing 1x2 switches is more economic than the one utilizing 2x2 switches. However, switches in the module described in figs. 2a and 2b should be synchronized to prevent loss of data.

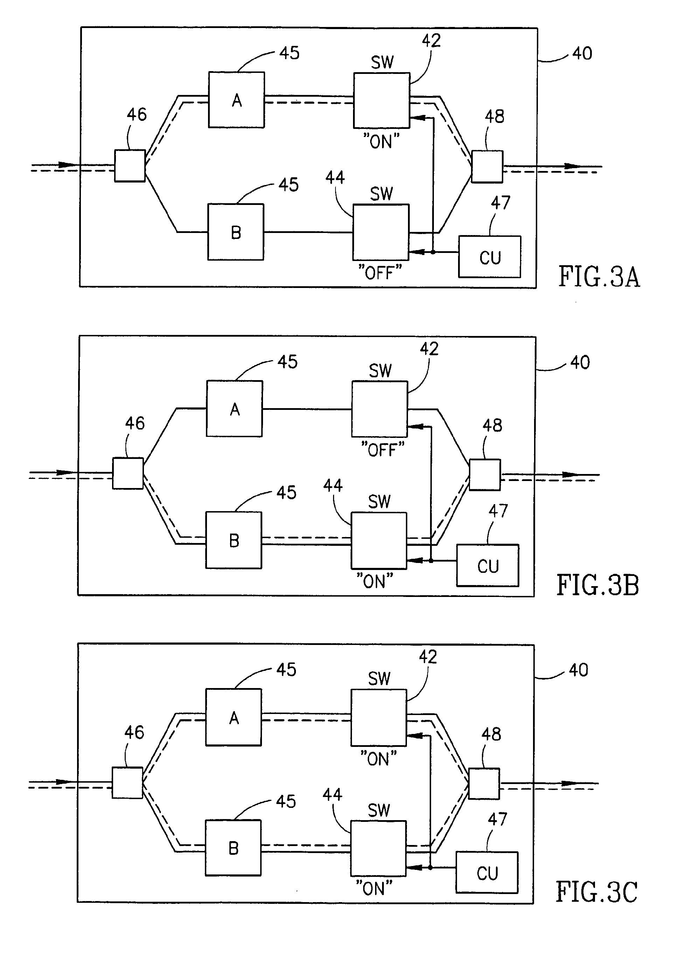

Figs. 3a, 3b and 3c shows yet another option of arranging the switching devices and optical elements in the module. In this embodiment, the module is marked 40, it comprises two optical switches 1x1 marked 42 and 44, an optical splitter 46, and optical coupler 48, two exemplary optical elements A and B marked 43 and 45 respectively, and a control unit 47. This topology of the module is very fast due to fast modern 1x1 switches, though some power loss in the splitter and the coupler have to be taken into account.

The three conditions of the module are shown in the drawings, where the optical elements A and B are connected to the network either separately, or together in the parallel connection. The parallel connection could be useful, for example, when one needs identical copies for parallel fast processing (for example, in optical packet switching networks). Another example of utilizing this configuration is using it as a transition stage between stages shown in Figs. 3a and 3b, thus achieving the absolutely hitless "make before brake" switching. To achieve hitless transitions and avoid optical beating effects at the coupler 48, one should make use of appropriate delay compensating lines and dispersive elements where needed.

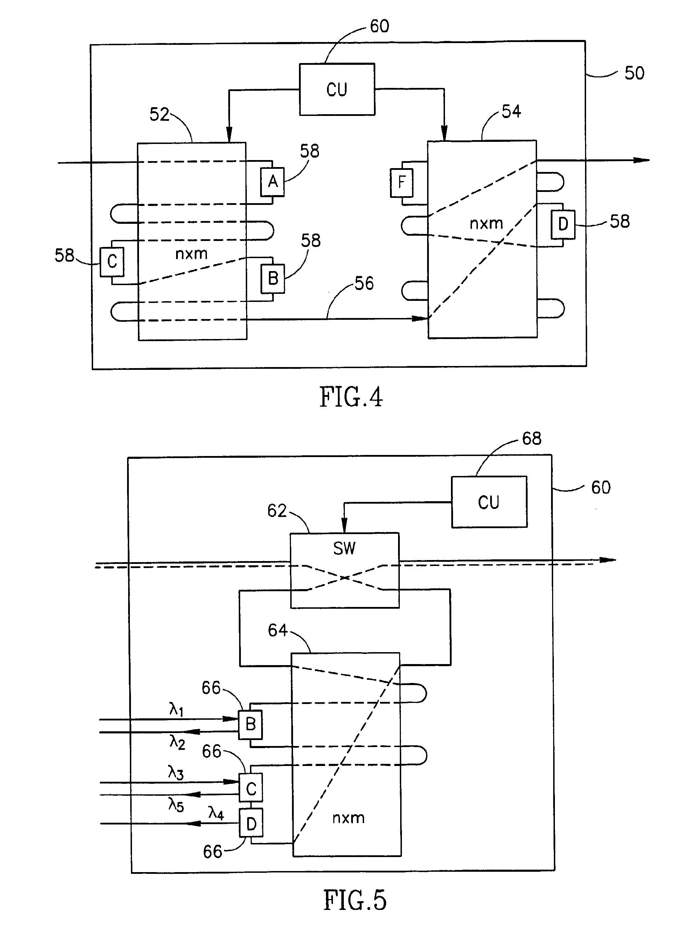

Fig. 4 illustrates yet another modification 50 of the inventive module. The optical switching devices constitute optical matrices (n x m cross-connectors) 52 and 54, connected to one another via an optical internal path 56. The matrices are connectable to a plurality of various optical/non-optical elements generally marked 58, and the way of connection is controlled by a control unit 60 which controls the internal connectivity in each of the matrices. Owing to loops formed at each stage of the matrices, the elements 58 may be arranged in various combinations. Fig. 4 shows one example of configuration, formed by inserting a number of elements in the optical path; the internal connections in the matrices are shown in dashed lines. The elements 58 can thereby be introduced, removed and exchanged in the module. If a network node comprises such a module, the node can be thus easily reconfigured.

Fig. 5 shows yet another embodiment 60 of the module, where an optical switch 62 is connectable to an optical matrix 64 like to a network element (marked A). In turn, the matrix 64 is connected to network elements B,C and D (generally marked 66) which can selectively be switched in and off the optical path. In this particular example, these elements are Optical Add/Drop Multiplexers (OADM) which are responsible for selectively introducing/removing particular wavelength channels into the optical path. The switching elements 62 and 64 are controlled by a control unit (CU) 68. One of possible connections is shown by the dashed line.

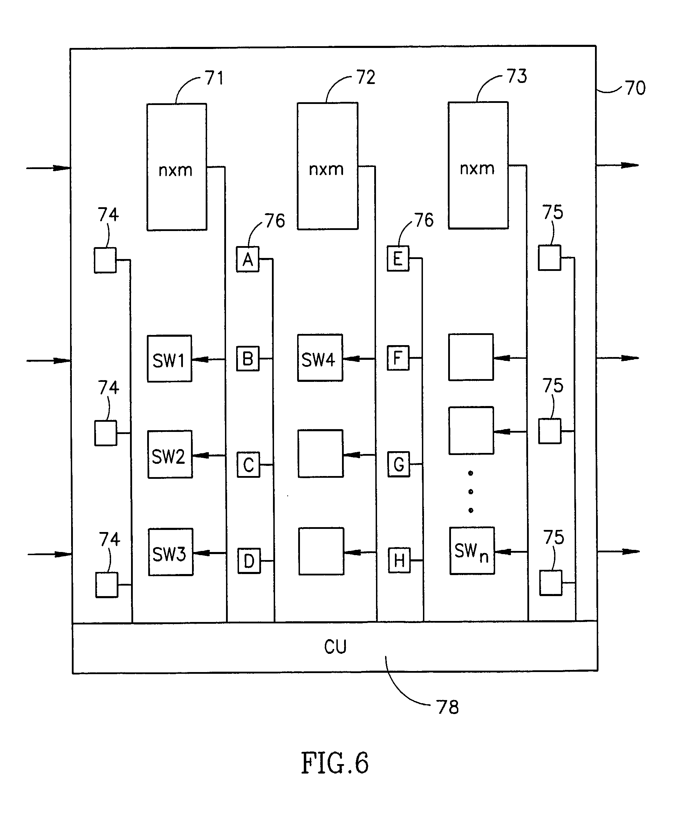

Fig. 6 illustrates a general case of the module configuration 70, which may have a number of optical inputs and a number of optical outputs, say, for serving different portions of a network node. The module comprises a plurality of optical switching devices, some of which are in the form of matrices (71, 72, 73), and some in the form of various optical switches Sw1 - SwN. This particular module further comprises three optical splitters generally marked 74, three optical couplers generally marked 75 and a plurality of optical/ non-optical elements A, B,...H generally marked 76 . The central unit 78 is responsible for arranging required configurations, i.e., for controlling switching devices, and for forming interconnections between the splitters, the couplers, the elements and the switches by forwarding control signals via buses in the module.

Any one of the simplified embodiments, described and illustrated above, may serve at least as part of a network node and be pre-installed in the network for future upgrading/reconfiguring of the node. The network elements A, B, etc. may have various functions. For example, in WDM network implementations, one or more OADMs can be connected to the optical switches of the module, thus ensuring selective manipulation of different channels in the node. Or, a particular network element may constitute an additional optical switching device connectable to other one or more network elements.

It should be appreciated that other embodiments and combinations thereof can be proposed in the frame of the inventive concept, and will form part of the present invention.

## Claims

1. A module for arbitrary configuring/reconfiguring a topology of optical networks, comprising:
- at least one optical switching device connectable to an optical network and
- a plurality of network elements connectable to said at least one optical switching device;
wherein said at least one optical switching device is controllable to selectively connect thereto and disconnect therefrom one or more of said elements for switching them in or off the network.

2. The module according to Claim 1, being a pre-manufactured module suitable for insertion into the optical network.

3. The module according to Claim 1 or 2, wherein the elements are connectable to the switching devices so that each of the elements can be either switched in the network, or bypassed.

4. The module according to any one of the preceding claims, wherein the elements connectable to said at least one optical switching device are selected from the following non-exhaustive list comprising optical and electro-optical components: amplifier, filter, multipiexer/demultiplexer (MUX-DEMUX), OADM (optical add-drop multiplexer), delay line, converting means, dispersion compensating device, additional optical switching device.

5. The module according to any one of the preceding claims, comprising the optical switching devices selected from the following non-exhaustive list including: 1x2 optical bypass switches, 2x2 optical bypass switches, optical switching matrices n x m, wherein any of the optical switching devices is connectable to at least one of the network elements and capable of selectively setting each of the elements in one of two modes being a working mode and a bypass mode.

6. A reconfigurable network node comprising the module according to any one of the preceding claims.

7. A method of configuring/reconfiguring an optical network by:
switching the module according to any one of Claims 1 to 5 into a portion of the optical network,
selecting one or more of the module's network elements to be introduced in the network according to a required configuration and considering the remaining network elements as non-selected,
forming connections in the module by controlling said at least one optical switching device to set the non-selected elements in the bypass mode and
the selected elements in the working mode according to the required configuration.

8. The method of Claim 7, wherein the step of switching the module into the network is provided when upgrading is required.

9. The method according to Claim 7, wherein the step of switching the module into the network is performed in advance, simultaneously with establishing the network.

10. The method according to Claim 9, wherein the step of switching the module into the network comprises pre-installing the module into a network node thereby rendering said node reconfigurable.

11. The method according to any one of Claims 7 to 10, wherein the step of forming the connections is performed in a hitless manner.
